# EUROPÄISCHE PATENTSCHRIFT

(11) **EP 0 500 528 B1**
(45) Veröffentlichungstag und Bekanntmachung des Hinweises auf die Patenterteilung: **16.02.1994**
(21) Anmeldenummer: 90910634.6
(22) Anmeldetag: 09.07.1990
(51) Int. Cl.: H02P 5/408, H02P 7/628

(54) **VERFAHREN ZUR KORREKTUR EINES ERMITTELTEN, FEHLERBEHAFTETEN ISTWERTES EINES OBERSCHWINGUNGSBEHAFTETEN SIGNALS UND SCHALTUNGSANORDNUNG ZUR DURCHFÜHRUNG DIESES VERFAHRENS**
PROCESS FOR CORRECTING A DETECTED FAULTY ACTUAL VALUE OF A SIGNAL WITH HARMONIC VIBRATIONS AND CIRCUIT ARRANGEMENT FOR IMPLEMENTING THIS PROCESS
PROCEDE POUR LA CORRECTION D'UNE VALEUR REELLE ERRONEE DETECTEE D'UN SIGNAL DEFECTUEUX D'OSCILLATION HARMONIQUE ET CIRCUIT POUR LA MISE EN UVRE DE CE PROCEDE

(30) Priorität: 13.11.1989 EP 89121018
(43) Veröffentlichungstag der Anmeldung: 02.09.1992
(73) Patentinhaber: SIEMENS AKTIENGESELLSCHAFT, 80333 München (DE)
(72) Erfinder: BAUER, Franz, D-8520 Erlangen (DE); BRAUN, Michael, D-8522 Herzogenaurach-Niederndorf (DE); HEINLE, Georg, D-8520 Erlangen (DE); SCHIERLING, Hubert, D-8520 Erlangen (DE)
(86) Internationale Anmeldenummer: EP9001115
(87) Internationale Veröffentlichungsnummer: WO9107810

(56) Entgegenhaltungen:
- IEEE TRANSACTIONS ON INDUSTRIAL ELECTRONICS AND CONTROL INSTR. volume 27, No. 2, May 1980, NEW YORK US pages 92 - 96; R.G. PLANIAPPAN ET AL.: "A Control Strategy for Reference Wave Adaptive Current Generation"
- Siemens Forsch.- u. Entwickl.-Berichte, Bd. 16, 1987, Nr. 2, Seiten 55 bis 59

## Beschreibung

Die Erfindung bezieht sich auf ein Verfahren zur Korrektur eines mittels einer ersten integrierenden Istwert-Erfassungseinrichtung ermittelten, fehlerbehafteten Istwertes eines oberschwingungsbehafteten Signals, das mittels einer ein oberschwingungsfreies Stellsignal approximierenden Modulationsfunktion und einer Regelstrecke aus einem oberschwingungsfreien Stellsignal erzeugt ist.

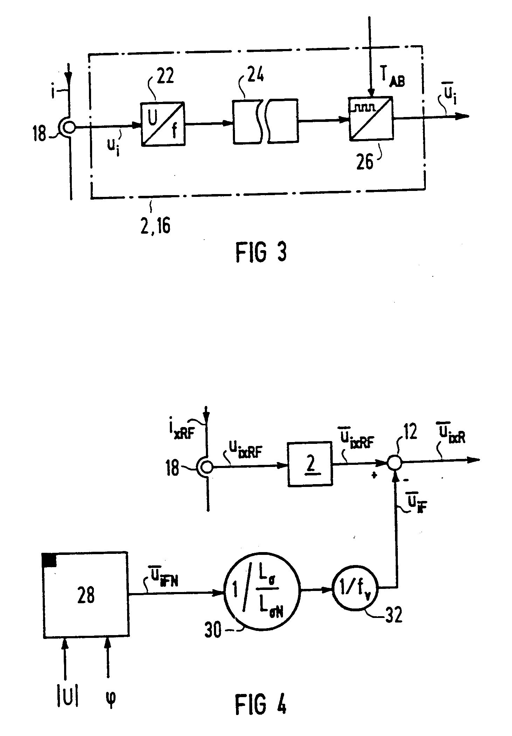

In der elektrischen Antriebstechnik werden analoge Meßgrößen, beispielsweise Umrichterstrom, Maschinenspannung, häufig mit integrierenden Meßwert-Erfassungseinrichtungen in digitale Meßwerte umgesetzt. Durch die Verwendung einer integrierenden Meßwert-Erfassungseinrichtung wird Meßrauschen herausgefiltert und diese Meßeinrichtung kann sehr kostengünstig aufgebaut werden. Ein typischer Aufbau einer integrierenden Meßwert-Erfassungseinrichtung ist in der Figur 3 näher beschrieben.

Oberschwingungen der Meßgröße werden dabei nur dann herausgefiltert, wenn sie im Meßintervall (Torzeit) den Mittelwert Null haben. Dies wird beispielsweise bei der Raumzeigermodulation näherungsweise herbeigeführt, indem die Torzeit gerade so groß wie die Dauer einer Schaltzustandsfolge gemacht wird, die einen Sollzeiger approximiert.

Wenn die Oberschwingungen der Meßgröße im Meßintervall (Torzeit) nicht vernachlässigt werden können, ist der mittels der integrierenden Meßwert-Erfassungseinrichtung ermittelte Istwert fehlerbehaftet. Dieser Fehler ist von Torzeit zu Torzeit vom Mittelwert der Oberschwingungen abhängig. Welche Oberschwingungen mit welcher Amplitude die Meßgröße beaufschlagen, ist von der Vorrichtung, die diese Oberschwingungen anregt, abhängig. Bei einem Pulsumrichter mit Spannungszwischenkreis kann die Umrichterspannung mittels vorberechneter, optimierter Pulsmuster gesteuert werden. Diese oberschwingungsbehaftete Umrichterspannung wird einer Asynchronmaschine zugeführt. Die Oberschwingungen werden vom vorberechneten, optimierten Pulsmuster angeregt. Wenn man nun bei dieser Asynchronmaschine das Moment regeln will, muß der Umrichterausgangsstrom erfaßt werden. Da dieser jedoch oberschwingungsbehaftet ist, wird mittels der integrierenden Meßwert-Erfassungseinrichtung der Istwert des momentenbildenden Stromes fehlerhaft, wodurch die Momentenregelung der Asynchronmaschine fehlerhaft wird.

Der Erfindung liegt deshalb die Aufgabe zugrunde, ein Verfahren zur Korrektur dieses fehlerbehafteten, mittels einer integrierenden Meßwert-Erfassungseinrichtung ermittelten Istwertes einer oberschwingungsbehafteten Meßgröße und eine Schaltungsanordnung zur Durchführung des Verfahrens anzugeben, wodurch ein fehlerfreier Istwert zur weiteren Verarbeitung bereitgestellt werden kann.

Diese Aufgabe wird erfindungsgemäß dadurch gelöst, daß ein Oberschwingungssignal aus einem oberschwingungsbehafteten Stellsignal unter Zuhilfenahme des oberschwingungsfreien Stellsignals ermittelt wird, daß dieses ermittelte Oberschwingungssignal ein Ersatzmodell der Regelstrecke beaufschlagt, daß fortlaufend der Mittelwert des Modellsignals während der Torzeitintervalle der ersten integrierenden Istwert-Erfassungseinrichtung mittels einer zweiten integrierenden Istwert-Erfassungseinrichtung ermittelt wird und daß der fehlerbehaftete Istwert mittels der am Ende jedes Torzeitintervalls bereitgestellten Korrekturwerte korrigiert wird.

Da der Fehler des ermittelten Istwertes von den Oberschwingungen, deren Mittelwerte ungleich Null sind, herrührt, wird zunächst ein diesen Oberschwingungen proportionales Oberschwingungssignal ermittelt. Dieses Oberschwingungssignal wird mittels eines Modells der Regelstrecke, beispielsweise einer Induktivität, in ein Modellsignal gewandelt, das den Oberschwingungen des oberschwingungsbehafteten Signals proportional ist. Beide Signale werden nun jeweils einer integrierenden Istwert-Erfassungseinrichtung zugeführt, die jeweils innerhalb eines Torzeitintervalls der ersten integrierenden Istwert-Erfassungseinrichtung fortlaufend einen Mittelwert ermittelt, wobei die aus dem Modellsignal erzeugten Mittelwerte als Korrekturwerte dem fehlerbehafteten Istwert zugeführt werden.

Bei einem bevorzugten Verfahren sind die aufeinanderfolgenden Torzeitintervalle gleich breit und werden auf die Phasenlage des oberschwingungsfreien sinusförmigen Stellsignals synchronisiert. Dadurch kann für jedes Torzeitintervall, abhängig vom Pulsmuster, der Mittelwert des Oberschwingungssignals vorbestimmt und abgespeichert werden. Für die Vorabberechnung der Mittelwerte des Modellsignals wird als Ersatzmodell der Regelstrecke eine normierte Induktivität und eine Frequenz zugrundegelegt. Jeder Korrekturwert für die Korrektur des fehlerbehafteten Istwertes ergibt sich jeweils dann aus einem abgespeicherten Mittelwert, der mit dem Reziprokwert des Verhältnisses aus vorliegendem Induktivitätswert der tatsächlichen Regelstrecke und der bei der Vorabberechnung zugrundegelegten normierten Induktivität und dem Reziprokwert des Frequenzverhältnisses gewichtet wird.

Bei einem weiteren bevorzugten Verfahren wird bei ausreichender Rechenleistung das Oberschwingungssignal und dessen Mittelwert on-line aus der benutzten Pulsfolge mitberechnet und der errechnete Mittelwert wird als Korrekturwert vom ermittelten Istwert des oberschwingungsbehafteten Signals abgezogen. Dabei ist eine Synchronisation der Torzeitintervalle mit dem oberschwingungsfreien Stellsignal nicht erforderlich und die Breiten der Torzeitintervalle sind beliebig wählbar.

Durch das Verfahren wird der durch durch ein bekanntes Pulsmuster angeregten Oberschwingungen verursachte Fehler bei der Istwert-Ermittlung eines oberschwingungsbehafteten Signals mittels einer integrierenden Istwert-Erfassungseinrichtung korrigiert, so daß dieser korrigierte Istwert beispielsweise einer Stromregelung, einem Flußmodell oder einer Koordinatendrehschaltung zur Ermittlung von drehmoment- und flußbildenden Istwerten zugeführt werden kann.

Bei einer erfindungsgemäßen Schaltungsanordnung zur Durchführung des Verfahrens mit einem Modulator mit nachgeschalteter umrichtergespeisten Asynchronmaschine als Regelstrecke und einer ersten integrierenden Istwert-Erfassungseinrichtung sind das am Eingang des Modulators anstehende oberschwingungsfreie Stellsignal und das am Ausgang des Modulators anstehende obenschwingungsbehaftete Stellsignal einem Differenzbildner zugeführt, dessen Ausgang über ein Ersatzmodell der Regelstrecke mit einer zweiten integrierenden Istwert-Erfassungseinrichtung verbunden ist, deren Ausgang mit einem Vergleicher verknüpft ist, dessen erster Eingang mit dem Ausgang der ersten integrierenden Istwert-Erfassungseinrichtung verbunden ist.

Mittels dieser Schaltungsanordnung wird aus dem oberschwingungsbehafteten Signal ein Oberschwingungssignal gewonnen, aus dem mittels eines Ersatzmodells der Regelstrecke und einer zweiten integrierenden Istwert-Erfassungseinrichtung fortlaufend Korrekturwerte (Mittelwerte der am Ausgang des Ersatzmodells anstehenden Modellsignals) ermittelt werden. Diese Korrekturwerte werden mittels eines Vergleichers von den ermittelten Istwerten des oberschwingungsbehafteten Signals, die jeweils am Ende eines Torzeitintervalls am Ausgang der ersten integrierenden Istwert-Erfassungseinrichtung anstehen, abgezogen. Somit erhält man für eine weitere Verarbeitung einen korrigierten Istwert einer gemessenen oberschwingungsbehafteten Regelgröße.

Bei einer weiteren Schaltungsanordnung zur Durchführung einer Verfahrensvariante mit einem einen Speicher enthaltenden Modulator mit einer nachgeschalteten umrichtergespeisten Asynchronmaschine als Regelstrecke und einer ersten integrierenden Istwert-Erfassungseinrichtung ist ein Ausgang des Speichers über erstes einstellbares Konstantglied mit einem zweiten einstellbaren Konstantglied verknüpft, wobei der Ausgang des zweiten einstellbaren Konstantgliedes mit einem Vergleicher verbunden ist, dessen erster Eingang mit dem Ausgang der integrierenden Istwert-Erfassungseinrichtung verknüpft ist.

Da die die Oberschwingungen anregende Modulationsfunktion bekannt ist, kann man jeweils den Mittelwert des Oberschwingungssignals vorab bestimmen und abspeichern. Bei der Vorabberechnung der Mittelwerte wird ein normiertes Ersatzmodell für die Regelstrecke und eine Normfrequenz zugrundegelegt. Diese abgespeicherten Mittelwerte werden mit Hilfe der beiden Konstantglieder gewichtet, so daß dem Vergleicher seriell Korrekturwerte zugeführt wird. Das erste Konstantglied gibt ein Verhältnis des vorliegenden Ersatzmodells der Regelstrecke (umrichtergespeiste Asynchronmaschine) zu dem bei der Vorabberechnung zugrundegelegten normierten Ersatzmodell an. Das zweite Konstantglied berücksichtigt die unterschiedlichen.Frequenzen zur Normfrecuenz bei der Vorabberechnung. Deshalb gibt das zweite Konstantglied den Reziprokwert des Frequenzverhältnisses an. Bei dieser Schaltungsanordnung benötigt man für die Korrektur eines fehlerbehafteten ermittelten Istwertes nur zwei einstellbare Konstantglieder und einen Vergleicher zu den bereits vorhandenen Schaltungsteilen, wodurch der Aufbau dieser Schaltungsanordnung besonders einfach und preiswert ist.

Zur weiteren Erläuterung der Erfindung wird auf die Zeichnung Bezug genommen, in der Ausführungsbeispiele der Schaltungsanordnung zur Durchführung des erfindungsgemäßen Verfahrens zur Korrektur eines mittels einer integrierenden Istwert-Erfassungseinrichtung ermittelten, fehlerbehafteten Istwertes schematisch veranschaulicht sind.
- Figur 1: zeigt ein Blockschaltbild einer Schaltungsanordnung zur Durchführung des erfindungsgemäßen Verfahrens, in
- Figur 2: ist in einem Diagramm über dem Drehwinkel ω t ein pulsbreitengesteuertes Signal mit fünf Steuerwinkeln α₁ bis α₅ je Viertelperiode dargestellt, die
- Figur 3: zeigt ein Blockschaltbild einer bekannten integrierenden Istwert-Erfassungseinrichtung und in
- Figur 4: ist ein Blockschaltbild einer vorteilhaften Schaltungsanordnung zur Durchführung eines vorteilhaften Verfahrens veranschaulicht.

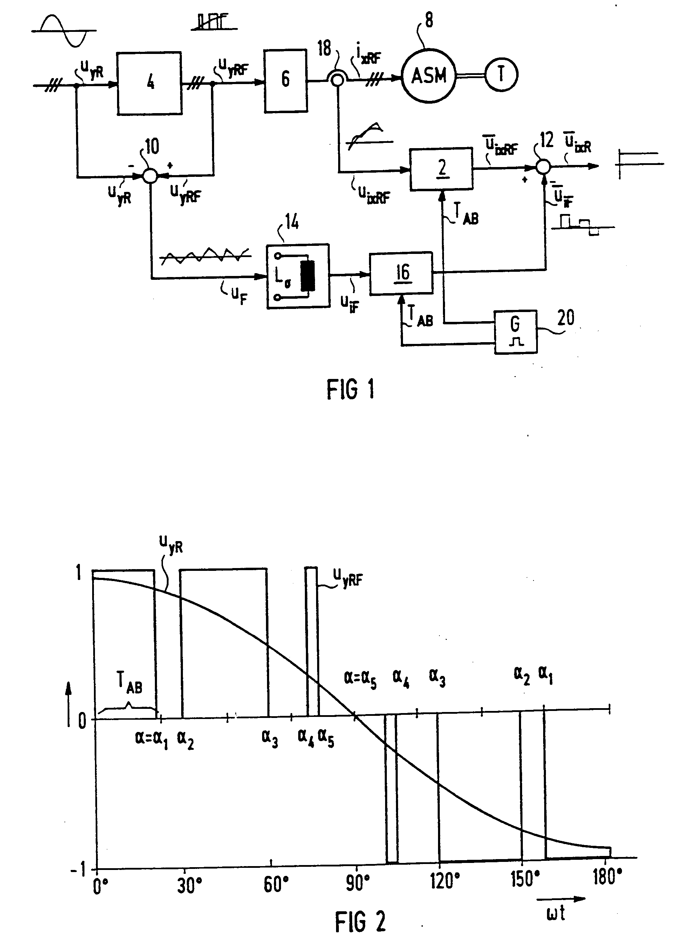

In der Figur 1 ist ein Blockschaltbild einer Schaltungsanordnung zur Durchführung des erfindungsgemäßen Verfahrens zur Korrektur eines mittels einer ersten integrierenden Istwert-Erfassungseinrichtung 2 ermittelten, fehlerbehafteten Istwertes u̅_{ixF} dargestellt. Diese Schaltungsanordnung besteht aus einem Modulator 4, einer Regelstrecke, bestehend aus einem Umrichter 6 und einer Asynchronmaschine 8, zwei Vergleichern 10 und 12, einem Ersatzmodell 14 der Regelstrecke, einer ersten und zweiten Istwert-Erfassungseinrichtung 2 und 16 und einem Taktgenerator 20 für die Torzeit der ersten und zweiten Istwert-Erfassungseinrichtung 2 und 16. Als umrichtergespeiste Regelstrecke kann auch ein Netzstromrichter vorgesehen sein, der in der Zeitschrift Siemens Forsch.- und Entwickl.-Ber., Bd.16, 1987, Nr.2, Seiten 55 bis 59, näher beschrieben ist. Dem Modulator 4 ist eingangsseitig ein oberschwingungsfreies Stellsignal u_{yR} zugeführt, das mittels eines im Modulator 4 abgespeicherten Pulsmusters α₁, ..., α₅ in ein pulsbreitenmoduliertes Stellsignal u_{yRF} überführt wird. Dieses oberschwingungsbehaftete Stellsignal u_{yRF}, in Figur 2 in einem Diagramm über dem Drehwinkel ωt näher dargestellt, steuert den die Asynchronmaschine 8 speisenden Umrichter 6. Durch die pulsbreitenmodulierte Umrichterausgangsspannung stellt sich durch die Regelstrecke 6, 8 ein oberschwingungsbehaftetes Signal i_{xRF}, auch Regelsignal bzw. Regelgröße genannt, ein. Dieses oberschwingungsbehaftete Regelsignal i_{xRF} wird mittels eines Meßgebers 18 erfaßt und mit Hilfe der ersten Istwert-Erfassungseinrichtung 2 in einen digitalen Istwert u̅_{ixRF} gewandelt. Da das Regelsignal i_{xRF} oberschwingungsbehaftet ist, ist der Meßwert u_{ixRF} der ersten Istwert-Erfassungseinrichtung 2 ebenfalls oberschwingungsbehaftet, wodurch nur ein fehlerbehafteter Istwert u̅_{ixRF} ermittelt werden kann, weil innerhalb des Torzeitintervalls T_{AB} der Mittelwert ungleich Null ist.

Die Oberschwingungen werden durch das Modulationsverfahren bzw. durch das abgespeicherte Pulsmuster α₁, ..., α₅ angeregt. Bei einem pulsbreitenmodulierten Signal u_{yRF}, näher in Figur 2 in einem Diagramm über dem Drehwinkel ωt dargestellt, sind für jede Viertelperiode fünf Steuerzeiten α₁, ..., α₅ festgelegt, die in einem Speicher des Modulators 4 abgelegt sind. Im Speicher sind nicht nur die Steuerzeiten α₁, ..., α₅ der pulsbreitenmodulierten Spannung u_{yRF}, deren Grundschwingungsamplitude dem Amplitudenverlauf des Stellsignals u_{yR} für einen Aussteuerungsgrad entspricht, abgespeichert, sondern gemäß der Auflösung des Aussteuerungsgrades mehrere. Da der Umrichter 6 eine Drehstromasynchronmaschine 8 speist, ist ein dreiphasiges Signalsystem u_{yR}, u_{yS} und u_{yT} als Stellspannungssystem vorgegeben, von dem hier nur das Signal u_{yR} betrachtet wird. Das Signal system u_{yR}, u_{yS}, u_{yT} kann von einem Sollwertgeber oder von einer Steuer- und Regeleinrichtung ermittelt werden. Als Modulator 4 kann im einfachsten Fall für jede Phase ein Komparatcr vorgesehen sein, die jeweils in Abhängigkeit der abgespeicherten Steuerzeiten α₁, ..., α₅ angesteuert werden. Diese Steuerzeiten α₁, ..., α₅ werden mittels Amplitudenwerten und Phasenlagen der am Modulator 4 anstehenden Stellspannungen u_{yR}, u_{yS} und u_{yT} aus einem im Modulator 4 angeordneten Speicher ausgelesen. Vorberechnete optimierte Pulsmuster sind bekannt, beispielsweise aus der Zeitschrift etz-A, Band 94, 1973, Heft 5, Seiten 299 bis 301. Die Anwendung vorberechneter, optimierter Pulsmuster bei Pulsumrichtern mit Spannungszwischenkreis zur Speisung von Drehstromasynchronmaschinen ist ebenfalls geläufig. Durch die Verwendung vorberechneter Pulsmuster entsteht ein oberschwingungsbehaftetes Regelsignal i_{xRF}, das bei der Verwendung einer ersten integrierenden Istwert-Erfassungseinrichtung 2 in einen fehlerbehafteten Istwert u̅_{ixRF} gewandelt wird.

Um den durch die Oberschwingungen verursachten Fehler zu eliminieren, muß zunächst das verursachende Oberschwingungssignal u_{F} ermittelt werden. Dazu wird dem Vergleicher 10 am invertierenden Eingang das oberschwingungsfreie Stellsignal u_{yR} und am nichtinvertierenden Eingang das vom Modulator 4 erzeugte oberschwingungsbehaftete Stellsignal u_{yRF} zugeführt. An seinem Ausgang steht dann das Oberschwingungssignal u_{F} an. Dieses Oberschwingungssignal u_{F} wird mittels des Ersatzmodells 14 der Regelstrecke 6, 8 in ein Modellsignal u_{iF} umgewandelt, das dem überlagerten Oberschwingungssignal des Regelsignals i_{xRF} entspricht. Als Ersatzmodell 14 für die Regelstrecke 6, 8, bestehend aus einer umrichtergespeisten Asynchronmaschine 8, ist im einfachsten Fall eine Induktivität vorgesehen. Der Wert der Induktivität entspricht der Streuinduktivität Lσ der Asynchronmaschine 8. Das Modellsignal u_{iF} wird dann der zweiten Istwert-Erfassungseinrichtung 16 zugeführt, die daraus Mittelwerte u̅_{iF} ermittelt. Dabei wird jeder Mittelwert u̅_{iF} immer innerhalb eines Torzeitintervalls T_{AB} der ersten Istwert-Erfassungseinrichtung 2 ermittelt. Am Ende jedes Torzeitintervalls T_{AB} steht ein digitaler Wert an, der als Maß des Fehlers gilt. Diese fortlaufend ermittelten Korrekturwerte u̅_{iF} werden dem invertierenden Eingang des Ver gleichers 12 zugeführt. Am nichtinvertierenden Eingang dieses Vergleichers 12 stehen die fehlerbehafteten Istwerte u̅_{ixRF} der fortlaufenden Torzeitintervalle T_{AB} an. Am Ausgang erscheint dann ein korrigierter Istwert u̅_{ixR}, der dann weiterverarbeitet werden kann, beispielsweise in einer Stromregelung, einem Flußmodell oder einer Koordinatendrehschaltung zur Ermittlung von drehmoment- und flußbildenden Stromkomponenten.

Bei dieser Schaltungsanordnung müssen die Torzeitintervalle nicht alle gleich breit sein und auch nicht auf die Phasenlage der Grundschwingung des oberschwingungsbehafteten Stellsignals u_{yRF} synchronisiert werden.

In der Figur 3 ist ein typischer Aufbau der integrierenden Istwert-Erfassungseinrichtung 2 bzw. 16 näher dargestellt. Die Istwert-Erfassungseinrichtung 2 bzw. 16 enthält einen Spannungs-Frequenz-Wandler 22, eine Ubertragungsstrecke 24 mit oder ohne Potentialtrennung und eine Auswerteschaltung 26. Der Spannungs- Frequenz-Wandler 22 erzeugt aus einem Meßsignal uᵢ einen Pulszug mit einer dem Meßsignal uᵢ proportionalen Frequenz. Die Auswerteschaltung 26 zählt innerhalb eines Torzeitintervalls T_{AB} die einlaufenden Impulse des Pulszuges. Die ermittelte Anzahl der Pulse ist proportional zum Integral (Mittelwert) der Meßgröße uᵢ und erscheint zur Torzeit T_{AB} im Verhältnis gesetzt als digitaler Istwert u̅ᵢ am Ausgang der Auswerteschaltung 26. Während dieser Torzeitintervalle T_{AB} wird, gemäß der Schaltungsanordnung nach Figur 1, aus dem ermittelten Oberschwingungssignal u_{F} Korrekturwerte u̅_{iF} ermittelt und jeweils am Ende eines Torzeitintervalls T_{AB} vom ermittelten Istwert u̅_{ixRF} subtrahiert, so daß der von den Oberschwingungen verursachte Fehler wieder aufgehoben ist.

Die Figur 4 zeigt eine weitere Schaltungsanordnung zur Durchführung einer Verfahrensvariante zur Korrektur des fehlerbehafteten Istwertes u̅_{ixRF}. Da die verwendeten Fulsmuster α₁, ..., α₅ und damit die Modulationsfunktion, die die Oberschwingungen anregen, und das Ersatzmodell der Regelstrecke bekannt sind, können die Mittelwerte für jedes Torzeitintervall T_{AB} vorabberechnet werden. Dazu müssen jedoch die aufeinanderfolgenden Torzeitintervalle T_{AB} auf die Phasenlage der Grundschwingung des oberschwingungsbehafteten Stellsignals u_{yRF} synchronisiert werden. Diese abhängig vom Pulsmuster vorab berechneten normierten Mittelwerte u̅_{iFN} werden in einem Speicher 28 abgelegt. Zur Berechnung der normierten Mittelwerte u̅_{iFN} ist als Ersatzmodell der Regelstrecke 6, 8 ein Induktivitätswert L_{σN} und eine eine vorbestimmte Drehzahl entsprechende Frequenz zugrundegelegt worden. Ein Ausgang des Speichers 28, an dem in Abhängigkeit von einer Adresse |U|, φ ein normierter Mittelwert u̅_{iFN} ansteht, ist über ein erstes einstellbares Konstantglied 30 mit einem zweiten einstellbaren Konstantglied 32 verknüpft, dessen Ausgang mit dem invertierenden Eingang des Vergleichers 12 verbunden ist.

Das erste einstellbare Konstantglied 30 ist auf einen Reziprowert des Modellverhältniswerts L_{σ}/L_{σN} einstellbar, daß das Verhältnis des vorliegenden Induktivitätswertes Lσ zum Induktivitätswert L_{σN} angibt, der bei Vorabberechnung des Mittelwertes u̅_{iFN} zugrundegelegt wurde. Das zweite einstellbare Konstantglied 32 ist auf einen Reziprokwert des Frequenzverhältnisses einstellbar. Durch die Vorabberechnung der Mittelwerte u̅_{iFN} der Oberschwingungen des Regelsignals i_{xRF} ist der Aufbau dieser Schaltungsanordnung besonders einfach und preiswert, da die berechneten Werte zusätzlich zu den Pulsmustern in einem vorhandenen Speicher abgelegt werden.

Wenn die Rechenleistung des Rechners einer nicht näher dargestellten Steuer- und Regelschaltung, der das oberschwingungsfreie Stellsignal u_{yR} in Abhängigkeit von Sollwerten und dem berechneten Istwert u̅_{ixRF} des oberschwingungsbehafteten Regelsignals i_{xRF} berechnet, groß genug ist, kann der Mittelwert der Oberschwingungen on-line aus der benutzten Pulsfolge mitberechnet werden und mittels eines Modellverhältniswertes und eines Reziprokwertes als Korrekturwert vom ermittelten fehlerbehafteten Istwert abgezogen werden, der dann als korrigierter Istwert u̅_{ixR} des Regelsignals i_{xRF} in der nicht dargestellten Steuer- und Regelschaltung weiterverarbeitet wird. Die Ermittlung des Istwertes u̅_{ixRF} aus dem Regelsignal i_{xRF} kann auch mittels des die Steuer- und Regelschaltung enthaltenden Rechners übernommen werden.

## Patentansprüche

1. Verfahren zur Korrektur eines mittels einer ersten integrierenden mit einem Torzeitintervall versehenen Istwert-Erfassungseinrichtung (2) ermittelten, fehlerbehafteten Istwertes (u̅_{ixRF}) eines oberschwingungsbehafteten Signals (i_{xRF}), das mittels einer ein oberschwingungsfreies Stellsignal (u_{yR}) approximierenden Modulationsfunktion und einer Regelstrecke (6, 8) aus einem oberschwingungsfreien Stellsignal (u_{yR}) erzeugt ist, **gekennzeichnet**, durch folgende Verfahrensschritte:
a) Ermittlung eines Oberschwingungssignals (u_{F}) aus einem oberschwingungsbehafteten Stellsignal (u_{yRF}) unter Zuhilfenahme des oberschwingungsfreien Stellsignals (u_{yR});
b) Beaufschlagung eines Ersatzmodells (14) der Regelstrecke (6, 8) mit dem ermittelten Oberschwingungssignal (u_{F});
c) fortlaufende Ermittlung des Mittelwertes des Modellsignals (u_{iF}) während der Torzeitintervalle (T_{AB}) der ersten integrierenden Istwert-Erfassungseinrichtung (2) mittels einer zweiten integrierenden Istwert-Erfassungseinrichtung (16) und
d) Korrektur des fehlerbehafteten Istwertes (u̅_{ixRF}) mittels der am Ende jedes Torzeitintervalls (T_{AB}) bereitgestellten Korrekturwerte (u̅_{iF}).

2. Verfahren nach Anspruch 1, **dadurch gekennzeichnet**, daß das Oberschwingungssignal (u_{F}) aus der Differenz des oberschwingungsbehafteten Stellsignals (u_{yRF}) mit dem oberschwingungsfreien Stellsignal (u_{yR}) erzeugt wird.

3. Verfahren nach Anspruch 1, **dadurch gekennzeichnet**, daß die aufeinanderfolgenden Torzeitintervalle (T_{AB}) auf die Phasenlage des oberschwingungsbehafteten Stellsignals (u_{yRF}) synchronisiert werden.

4. Verfahren nach Anspruch 3, **dadurch gekennzeichnet**, daß die Torzeitintervalle (T_{AB}) gleich breit sind.

5. Verfahren nach Anspruch 1, 3 und 4, **dadurch gekennzeichnet**, daß für jedes Torzeitintervall (T_{AB}) abhängig von der vorbestimmten Modulationsfunktion ein normierter Mittelwert eines normierten Modellsignals vorab bestimmt und abgespeichert wird.

6. Verfahren nach Anspruch 1 und 5, **dadurch gekennzeichnet**, daß jeder abgespeicherte normierte Mittelwert mit einem Reziprokwert des Modellverhältniswerts (L_{σ}/L_{σN}) und einem Reziprokwert (l/fᵥ) des Frequenzverhältnisses gewichtet und dem fehlerbehafteten Istwert (u̅_{ixRF}) als Korrekturwert (u̅_{iF}) zugeführt wird.

7. Schaltungsanordnung zur Durchführung des Verfahrens nach Anspruch 1 mit einem Modulator (4) mit einer nachgeschalteten umrichtergespeisten Regelstrecke (6, 8) und einer ersten integrierenden Istwert-Erfassungseinrichtung (2), **dadurch** **gekennzeichnet**, daß das am Eingang des Modulators (4) anstehende oberschwingungsfreie Stellsignal (u_{yR}) und das am Ausgang des Modulators (4) anstehende oberschwingungsbehaftete Stellsignal (u_{yRF}) einem Differenzbildner (10) zugeführt sind, dessen Ausgang über ein Ersatzmodell (14) der Regelstrecke (6, 8) mit einer zweiten integrierenden Istwert-Erfassungseinrichtung (16) verbunden ist, deren Ausgang mit einem Vergleicher (12) verknüpft ist, dessen erster Eingang mit dem Ausgang der ersten integrierenden Istwert-Erfassungseinrichtung (2) verbunden ist.

8. Schaltungsanordnung nach Anspruch 7, **dadurch** **gekennzeichnet**, daß als Ersatzmodell (14) der Regelstrecke (6, 8) eine Induktivität (L_{σ}) vorgesehen ist.

9. Schaltungsanordnung zur Durchführung des Verfahrens nach den Ansprüchen 1, 5 und 6 mit einem einen Speicher (28) enthaltenden Modulator (4) mit einer nachgeschalteten umrichtergespeisten Regelstrecke (6, 8) und einer ersten integrierenden Istwert-Erfassungseinrichtung (2), **dadurch gekennzeichnet**, daß ein Ausgang des Speichers (28) über ein erstes einstellbares Konstantglied (30) mit einem zweiten einstellbaren Konstantglied (32) verknüpft ist, wobei der Ausgang des zweiten einstellbaren Konstantgliedes (32) mit einem vergleicher (12) verbunden ist, dessen erster Eingang mit dem Ausgang der ersten integrierenden Istwert-Erfassungseinrichtung (2) verbunden ist.

## Claims

1. Method for the correction of an actual value (u̅_{ixRF}) of a signal (i_{xRF}) subject to harmonics, the actual value being subject to errors and being determined by means of a first integrating actual-value detection device (2) provided with a gate time interval, the signal being generated by means of a modulation function approximating a harmonic-free actuating signal (u_{yR}) and a controlled system (6, 8) from a harmonic-free actuating signal (u_{yR}),
characterized by the following procedural steps:
a) determination of a harmonic signal (u_{F}) from an actuating signal (u_{yRF}) subject to harmonics with the aid of the harmonic-free actuating signal (u_{yR});
b) loading of a replacement model (14) of the controlled system (6, 8) with the determined harmonic signal (u_{F});
c) continuous determination of the mean value of the model signal (u_{iF}) during the gate time intervals (T_{AB}) of the first integrating actual-value detection device (2) by means of a second integrating actual-value detection device (16) and
d) correction of the actual value (u̅_{ixRF}) subject to errors by means of the correction values (u̅_{iF}) prepared at the end of each gate time interval (T_{AB}).

2. Method according to claim 1,
characterized in that the harmonic signal (u_{F}) is generated from the difference between the actuating signal (u_{yRF}) subject to harmonics and the harmonic-free actuating signal (u_{yR}).

3. Method according to claim 1,
characterized in that the successive gate time intervals (T_{AB}) are synchronized with the phase relation of the actuating signal (u_{yRF}) subject to harmonics.

4. Method according to claim 3,
characterized in that the gate time intervals (T_{AB}) are equally wide.

5. Method according to claim 1, 3 and 4,
characterized in that for each gate time interval (T_{AB}) dependent on the predetermined modulation function a standardized mean value of a standardized model signal is first of all determined and stored.

6. Method according to claim 1 and 5,
characterized in that each stored standardized mean value is weighted with a reciprocal value of the model ratio value (L_{σ}/L_{σ}N) and a reciprocal value (l/fᵥ) of the frequency ratio and supplied to the actual value (u̅_{ixRF}) subject to errors as a correction value (u̅_{iF}).

7. Circuit arrangement for carrying out the method according to claim 1 with a modulator (4) with a series-connected converter-fed controlled system (6, 8) and a first integrating actual-value detection device (2), characterized in that the harmonic-free actuating signal (u_{yR}) present at the input of the modulator (4) and the actuating signal (u_{yRF}) subject to harmonics and present at the output of the modulator (4) are supplied to a difference-forming device (10), the output of which is connected by way of a replacement model (14) of the controlled system (6, 8) to a second integrating actual-value detection device (16), the output of which is linked to a comparator (12), the first input of which is connected to the output of the first integrating actual-value detection device (2).

8. Circuit arrangement according to claim 7,
characterized in that an inductance (L_{σ}) is provided as a replacement model (14) of the controlled system (6, 8).

9. Circuit arrangement for carrying out the method according to claims 1, 5 and 6 with a modulator (4) containing a memory (28) with a series-connected converter-fed controlled system (6, 8) and a first integrating actual-value detection device (2), characterized in that an output of the memory (28) is linked by way of a first adjustable constant element (30) to a second adjustable constant element (32), whereby the output of the second adjustable constant element (32) is connected to a comparator (12), the first input of which is connected to the output of the first integrating actual-value detection device (2).

## Revendications

1. Procédé pour corriger une valeur réelle (u̅_{ixRF}), qui est affectée d'une erreur et est déterminée au moyen d'un premier dispositif intégrateur (2) de détection de la valeur réelle, affectée d'un intervalle de transit, d'un signal (i_{xRF}) affecté d'harmoniques et qui est produit au moyen d'une fonction de modulation, qui reproduit de façon approximative un signal de régulation (u_{yR}) exempt d'harmoniques, et une section de réglage (6,8) constituée par un signal de réglage (u_{yR}) exempt d'harmoniques, caractérisé par les étapes opératoires suivantes :
a) détermination d'un signal d'harmonique (u_{F}) à partir d'un signal de réglage (u_{yRF}) affecté d'harmoniques, à l'aide du signal de réglage (u_{yR}) exempt d'harmoniques;
b) application du signal d'harmonique déterminé (u_{F}) à un modèle de remplacement (14) de la section de régulation (6,8);
c) détermination permanente de la valeur moyenne du signal de modèle (u_{iF}) pendant l'intervalle de transit (T_{AB}) du premier dispositif intégrateur (2) de détection de la valeur réelle, à l'aide d'un second dispositif intégrateur (16) de détection de la valeur réelle, et
d) correction de la valeur réelle (u̅_{ixRF}) affectée d'une erreur, au moyen des valeurs de correction (u̅_{iF}) préparées à la fin de chaque intervalle de porte (T_{AB}).

2. Procédé suivant la revendication 1, caractérisé par le fait que le signal d'harmonique (u_{F}) est formé entre le signal de réglage (u_{yRF}) affecté d'harmoniques et le signal de réglage (u_{yR}) exempt d'harmoniques.

3. Procédé suivant la revendication 1, caractérisé par le fait que les intervalles de temps de transit successifs (T_{AB}) sont synchronisés sur la position de phase du signal de réglage (u_{yRF}) affecté d'harmoniques.

4. Procédé suivant la revendication 3, caractérisé par le fait que les intervalles de temps de transit (T_{AB}) sont égaux.

5. Procédé suivant les revendications 1, 3 et 4, caractérisé par le fait que pour chaque intervalle de temps de transit (T_{AB}), une valeur moyenne normalisée d'un signal modèle normalisé est déterminée par avance et est mémorisée en fonction de la fonction de modulation prédéterminée.

6. Procédé suivant les revendications 1 et 5, caractérisé par le fait que chaque valeur moyenne normalisée mémorisée est pondérée par l'inverse de la valeur du rapport de modèle (L_{σ}/L_{σN}) et par l'inverse (1/fᵥ) du rapport des fréquences et est ajoutée, en tant que valeur de correction (u̅_{F}), à la valeur réelle (u̅_{ixrF}) affectée d'erreurs.

7. Montage pour la mise en oeuvre du procédé suivant la revendication 1, comportant un modulateur (4) possédant une section de régulation (6,8) branchée en aval et alimentée par un convertisseur statique, et un premier dispositif intégrateur (2) de détection de la valeur réelle, caractérisé par le fait que le signal de réglage (u_{yR}), qui est exempt d'harmoniques et qui est appliqué à l'entrée du modulateur (4), et le signal de réglage (u_{xyrF}), qui est affecté d'harmoniques et qui est présent sur la sortie du modulateur (4), sont envoyés à un dispositif (10) de formation de la différence, dont la sortie est connectée, par l'intermédiaire d'un modèle de remplacement (14) de la section de régulation (6,8), à un second dispositif intégrateur (16) de détection de la valeur réelle, dont la sortie est reliée à un comparateur (12), dont la première entrée est raccordée à la sortie du premier dispositif intégrateur (2) de détection de la valeur réelle.

8. Montage suivant la revendication 7, caractérisé par le fait qu'il est prévu comme modèle de remplacement (14) de la section de régulation (6,8), une inductance (L_{σ}).

9. Montage pour la mise en oeuvre du procédé suivant l'une des revendications 1, 5 et 6, comportant un modulateur (4) comportant une mémoire (28) et une section de régulation (6,8) branchée en aval et alimentée par un convertisseur statique, et un premier dispositif intégrateur (2) de détection de la valeur réelle, caractérisé par le fait qu'une sortie de la mémoire (28) est raccordée, par l'intermédiaire d'un premier circuit réglable (30) délivrant une constante, à un second circuit réglable (32) délivrant une constante, la sortie du second circuit réglable (32) délivrant une constante étant connectée à un comparateur (12), dont la première entrée est raccordée à la sortie du premier dispositif intégrateur (2) de détection de la valeur réelle.
